# EUROPÄISCHE PATENTSCHRIFT

(11) **EP 3 975 804 B1**
(45) Veröffentlichungstag und Bekanntmachung des Hinweises auf die Patenterteilung: **22.02.2023**
(21) Anmeldenummer: 20754673.0
(22) Anmeldetag: 31.07.2020
(51) Int. Cl.: A47J 31/40, G07F 13/06

(54) **FROSTSICHERUNG EINES SCHIENENFAHRZEUG-HEISSGETRÄNKEAUTOMATEN**
FROST-PROOFING AN AUTOMATIC HOT DRINKS DISPENSER IN A RAIL VEHICLE
PROTECTION CONTRE LE GEL D'UN DISTRIBUTEUR AUTOMATIQUE DE BOISSONS CHAUDES DANS UN VÉHICULE FERROVIAIRE

(30) Priorität: 22.08.2019 DE 102019212554
(43) Veröffentlichungstag der Anmeldung: 06.04.2022
(73) Patentinhaber: Siemens Mobility GmbH, 81739 München (DE)
(72) Erfinder: CINARCI, Turgay, 51503 Rösrath (DE); KEMMERLING, Frank, 41472 Neuss (DE); KÜBECK, Thomas, 47929 Grefrath (DE)
(86) Internationale Anmeldenummer: PCT/EP2020/071619
(87) Internationale Veröffentlichungsnummer: WO 2021/032439

(56) Entgegenhaltungen:
- DE-U1-202014 005 408
- GB-A- 960 907

## Beschreibung

Die Erfindung betrifft eine Frostsicherung eines Schienenfahrzeug-Heißgetränkeautomaten.

In Schienenfahrzeugen werden herkömmliche, professionelle Heißgetränkeautomaten von Automatenherstellern verwendet. Siehe z.B. die Druckschrift DE 20 2014 005408 U1.

Diese Heißgetränkeautomaten sind im Allgemeinen für ein professionelles, stationäres Umfeld entworfen bzw. konzipiert, das sich deutlich von den Betriebsbedingungen in einem Schienenfahrzeug unterscheidet.

Beispielsweise sind im stationären Umfeld einer Großküche bzw. Kantine eine unterbrechungsfreie Energieversorgung sowie gleichbleibende Raumtemperaturen sichergestellt.

Dadurch ist der Betrieb des Heißgetränkeautomaten sowie der von ihm breitgestellten Heißgetränke in gleichbleibender, hoher Qualität und bei normaler Raumtemperatur in der Kantine bzw. Großküche gewährleistet.

Im normalen Betriebsalltag werden Schienenfahrzeuge ohne Energieversorgung auch für längere Zeiträume abgestellt. Damit ist auch ein an Bord befindlicher Heißgetränkeautomat von der Energieversorgung abgeschnitten bzw. entkoppelt.

Ohne Zusatzmaßnahmen würde Wasser, das in Behältern des Heißgetränkeautomaten als Frischwasser und als Grauwasser enthalten ist, bei tiefen Außentemperaturen gefrieren.

Um dies zu vermeiden, ist es bekannt, eine Grund-Energieversorgung des Schienenfahrzeugs bzw. des Heißgetränkeautomaten aufwendig über ein zusätzlich verlegtes Stromkabel zu gewährleistet.

Über dieses Stromkabel wird eine Heizung des Schienenfahrzeugs bzw. des Heißgetränkeautomaten realisiert, um dadurch den Heißgetränkeautomaten vor Frostschäden zu bewahren.

Wird ein Heißgetränkeautomat im stationären Umfeld außer Betrieb genommen, besteht die Anforderung, das im Heißgetränkeautomat enthaltene Wasser (Frischwasser, Grauwasser) zu entfernen.

Zu diesem Zweck wird im stationären Umfeld durch speziell geschultes Service-Personal eine Frischwasser-Zuleitung manuell über ein mechanisches Ventil unterbrochen, während der Grauwasser-Behälter dem Gerät entnommen und manuell entleert wird.

Eine derartige Entleerung eines Schienenfahrzeug-Heißgetränkeautomaten, die zum Schutz vor Frost wiederholt notwendig wäre, entspricht nicht dem Serviceprinzip von Schienenfahrzeugen, bei denen weitgehend automatisierte Prozesse zum Standard geworden sind.

Es ist daher Aufgabe der vorliegenden Erfindung, eine aufwandsarme, zuverlässige Anordnung zur Frostsicherung eines Schienenfahrzeug-Heißgetränkeautomaten anzugeben.

Diese Aufgabe wird durch die Merkmale des Anspruchs 1 gelöst.

Vorteilhafte Weiterbildungen sind in den abhängigen Ansprüchen angegeben.

Die Erfindung betrifft eine Frostsicherung eines Heißgetränkeautomaten in einem Schienenfahrzeug. Der Heißgetränkeautomat weist einen Frischwasserbehälter, eine Druckerhöhungspumpe sowie einen Heißwasserboiler auf. Der Frischwasserbehälter ist mit Frischwasser gefüllt, das zur Heißgetränkezubereitung bereitgestellt und verwendet wird.

Die Druckerhöhungspumpe ist zwischen dem Frischwasserbehälter und dem Heißwasserboiler angeordnet, so dass Frischwasser vom Frischwasserbehälter über die Druckerhöhungspumpe zum Heißwasserboiler gelangt. Die Druckerhöhungspumpe ist derart ausgebildet, dass ihr zugeführtes Frischwasser für eine gewünschte Heißgetränkezubereitung auf einen vorbestimmten Betriebsdruck gebracht wird.

Der Heißwasserboiler ist derart ausgestaltet ist, dass er ihm zugeführtes Frischwasser für die geplante Heißgetränkezubereitung erhitzt. Zwischen dem Frischwasserbehälter und der Druckerhöhungspumpe ist ein ansteuerbares erstes Entwässerungsventil angeordnet, das derart geschaltet ist, dass bei Frostgefahr das Leitungssystem zwischen dem Frischwasserbehälter und der Druckerhöhungspumpe von Frischwasser entleert wird.

Zwischen der Druckerhöhungspumpe und dem Heißwasserboiler ist ein ansteuerbares zweites Entwässerungsventil angeordnet ist, das derart geschaltet ist, dass bei Frostgefahr das Leitungssystem zwischen der Druckerhöhungspumpe und dem Heißwasserboiler sowie der Inhalt des Heißwasserboilers von Frischwasser entleert wird.

In einer vorteilhaften Weiterbildung ist das erste Entwässerungsventil und/oder das zweite Entwässerungsventil ausgangsseitig mit einem Grauwasserbehälter oder mit einem Gleiskörper verbunden, um das aus den Leitungssystemen entleerte Frischwasser zu entsorgen.

In einer vorteilhaften Weiterbildung weist der Frischwasserbehälter mindestens eine Gallone auf, die durch Personal entnehmbar ist.

In einer vorteilhaften Weiterbildung ist der Frischwasserbehälter mit einem steuerbaren Ventil verbunden, über das bei Frostgefahr das im Frischwasserbehälter enthaltene Frischwasser dem Gleisbett zugeführt wird.

In einer vorteilhaften Weiterbildung weist der Heißgetränkeautomat den Grauwasserbehälter auf, in dem bei der Heißgetränkezubereitung bzw. bei einem Reinigungsprozess entstandenes Grauwasser gesammelt wird.

In einer vorteilhaften Weiterbildung ist der Grauwasserbehälter mit einem steuerbaren Ventil verbunden, über das bei Frostgefahr das im Grauwasserbehälter enthaltene Wasser dem Gleisbett zugeführt wird.

In einer vorteilhaften Weiterbildung ist der Grauwasserbehälter derart ausgebildet, dass er für eine Entleerung durch Personal manuell entnehmbar ist.

In einer vorteilhaften Weiterbildung ist das erste Entwässerungsventil und/oder das zweite Entwässerungsventil als steuerbares Magnetventil ausgebildet.

In einer vorteilhaften Weiterbildung weist der Heißgetränkeautomat ein Magnetventil, einen Ausgleichsbehälter und einen Durchflussmesser auf, die derart angeordnet sind,
- dass Frischwasser vom Frischwasserbehälter zum Magnetventil gelangt,
- dass Frischwasser vom Magnetventil zum Ausgleichsbehälter gelangt,
- dass Frischwasser vom Ausgleichsbehälter sowohl zu einem Eingang des Durchflussmesser als auch zu einem Eingang des ersten Entwässerungsventils gelangt, wobei das erste Entwässerungsventil ausgangseitig mit dem Grauwasserbehälter oder mit dem Gleisbett verbunden ist,
- dass Frischwasser über den Durchflussmesser zum Eingang der Druckerhöhungspumpe gelangt,
- wobei das Magnetventil die Funktionalität aufweist, eine Menge an benötigtem Frischwasser aus dem Frischwasserbehälter für eine gewünschte Heißgetränkezubereitung bereitzustellen,
- wobei der Ausgleichsbehälter temperaturbedingte Änderungen des Frischwassers kompensiert, und
- wobei der Durchflussmesser über das Magnetventil steuert, dass eine gewünschte Menge an Frischwasser zur Heißgetränkezubereitung gelangt.

In einer vorteilhaften Weiterbildung ist parallel zur Druckerhöhungspumpe ein Überdruckventil geschaltet, deren Eingänge derart verbunden sind, dass vom Durchflussmesser kommendes Frischwasser sowohl an den Eingang der Druckerhöhungspumpe als auch an den Eingang des Überdruckventils gelangt, wobei das Überdruckventil bei Bedarf einen durch die Druckerhöhungspumpe verursachten Überdruck ausgleicht.

In einer vorteilhaften Weiterbildung sind die Druckerhöhungspumpe bzw. das Überdruckventil ausgangsseitig miteinander derart verbunden, dass das aufgeteilte Frischwasser nach Durchquerung der Parallelschaltung wieder zusammengefasst wird und an Eingänge des Heißwasserboilers und des zweiten Entwässerungsventils gelangt, wobei das zweite Entwässerungsventil ausgangseitig mit dem Grauwasserbehälter oder mit dem Gleisbett verbunden ist.

In einer vorteilhaften Weiterbildung ist der Heißwasserboiler mit einem elektropneumatischen Ventil gekoppelt, das derart ausgebildet ist, dass erhitztes Frischwasser vom Heißwasserboiler zur Heißgetränkezubereitung gelangt.

Durch die vorliegende Erfindung werden Frostschäden am Heißgetränkeautomaten des Schienenfahrzeugs vermieden.

Durch die vorliegende Erfindung wird über ein automatisch erstelltes Signal eine selbständig durchgeführte Entleerung des Heißgetränkeautomaten sichergestellt.

Alternativ dazu ist es möglich, die Entleerung des Heißgetränkeautomaten über ein manuelles Signal zu initialisieren.

Durch die Automatisierung der Entleerung können verschiedenste Betriebsszenarien kundenspezifisch berücksichtigt und zu individuellen automatischen Abläufen optimiert werden. Die vorliegende Erfindung ermöglicht eine hohe Flexibilität und Anpassbarkeit des gesamten Frostsicherungs-Systems an diverse Kundenwünsche.

Nachfolgend wird die vorliegende Erfindung anhand einer Zeichnung näher erläutert. Dabei zeigt:
- FIG 1: in einer Draufsicht Einzelheiten des Heißgetränkeautomaten, der Kernbestandteil der erfindungsgemäßen Anordnung ist,
- FIG 2: mit Bezug auf FIG 1 die Wasserzuführung bzw. Wasserabführung im Heißgetränkeautomaten,
- FIG 3: eine erfindungsgemäße Frostentleerung, die zentral initialisiert wird,
- FIG 4: eine erfindungsgemäße Frostentleerung, die lokal initialisiert wird, und
- Fig 5: eine erfindungsgemäße Frostentleerung, die lokal initialisiert und unter Verwendung eines Gallonensystems durchgeführt wird.

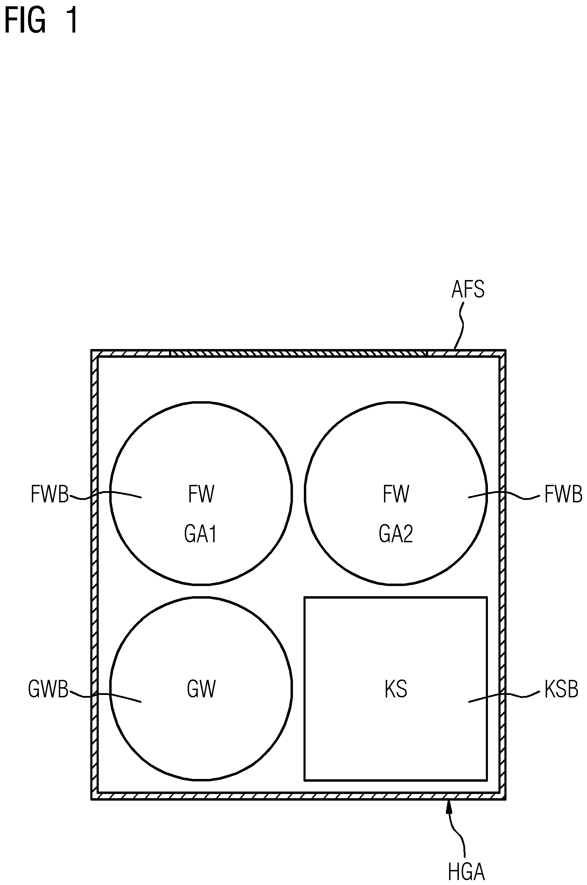

FIG 1 zeigt in einer Draufsicht Einzelheiten des Heißgetränkeautomaten HGA, der Kernbestandteil der erfindungsgemäßen Anordnung ist.

Der Heißgetränkeautomat HGA beinhaltet als Kaffeeautomat einen Frischwasserbehälter FWB, der hier zwei Gallonen GA1, GA2 umfasst.

Der Frischwasserbehälter FWB bzw. die Gallonen GA1, GA2 sind mit Frischwasser FW gefüllt, das zur Kaffeezubereitung verwendet wird.

Die Gallonen GA1, GA2 sind in einer ersten Ausgestaltung durch Personal manuell entfernbar, um diese mit Frischwasser FW befüllen bzw. entleeren zu können.

In einer bevorzugten zweiten Ausgestaltung sind die Gallonen GA1, GA2 des Frischwasserbehälters FWB über ein steuerbares Ventil entleerbar, so dass das im Frischwasserbehälter FWB enthaltene Frischwasser insbesondere bei Frostgefahr bevorzugt dem Gleisbett zugeführt wird.

Der Heißgetränkeautomat HGA beinhaltet weiterhin einen Grauwasserbehälter GWB, in dem beim der Kaffeezubereitung bzw. bei einem Reinigungsprozess entstandenes Grauwasser GW gesammelt wird.

Der Heißgetränkeautomat HGA weist eine Automaten-Frontseite AFS auf, die Bedienungselemente zum Betrieb des Heißgetränkeautomaten HGA durch Personal bereitstellt.

Zuletzt weist der Heißgetränkeautomat HGA einen Kaffeesud-Behälter KSB auf, in dem benutzter Kaffeesud KS als Abfall der Heißgetränke-Zubereitung gesammelt wird.

Der Grauwasserbehälter GWB ist dabei so ausgestaltet, dass er manuell als Tank entnommen werden kann, um das darin befindliche Grauwasser zu entsorgen - beispielsweise wird das Grauwasser durch Personal manuell dem Gleisbett zugeführt.

Alternativ und bevorzugt ist der Grauwasserbehälter GWB so ausgestaltet, dass das in ihm enthaltene Grauwasser über ein steuerbares Ventil entsorgt wird - beispielsweise wird das Grauwasser über das steuerbare Ventil dem Gleisbett zugeführt.

Das Frischwasser FW gelangt aus dem Frischwasserbehälter FWB - wie nachfolgend beschrieben - in ein Leitungssystem des Heißgetränkeautomaten HGA, um letztlich zur Kaffeezubereitung verwendet zu werden.

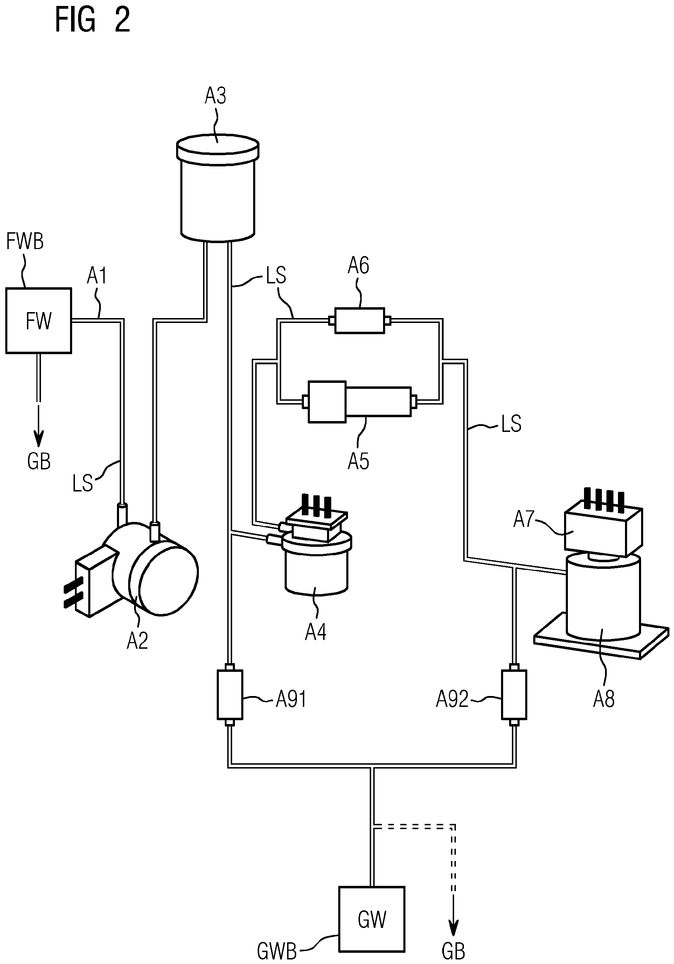

FIG 2 zeigt mit Bezug auf FIG 1 die Frischwasser-Zuführung bzw. die Grauwasserabführung über das Leitungssystem LS des Heißgetränkeautomaten HGA.

Im Betrieb des Heißgetränkeautomaten HGA gelangt das Frischwasser FW vom Frischwasserbehälter FWB über eine Zulaufleitung A1 zu einem Magnetventil A2.

Das Magnetventil A2 hat die Funktionalität, eine Menge an benötigtem Frischwasser FW aus dem Frischwasserbehälter FWB für eine gewünschte bzw. angeforderte Kaffeezubereitung bereitzustellen.

Mit anderen Worten wird durch das Magnetventil A2 die Zulaufleitung A1 für einen Frischwasserzulauf geöffnet oder gesperrt.

Nachfolgend gelangt das Frischwasser FW vom Magnetventil A2 über einen Ausgleichsbehälter A3 sowohl zu einem Durchflussmesser A4 als auch zu einem ersten Entwässerungsventil A91.

Der Ausgleichsbehälter A3 kompensiert eine temperaturbedingte Ausdehnung, Verdunstung oder Verdampfung des Frischwassers FW.

Der Durchflussmesser A4 stellt sicher bzw. steuert, dass die gewünschte Menge an Frischwasser FW zur Kaffeezubereitung gelangt. Zu diesem Zweck ist er mit dem Magnetventil A2 gekoppelt bzw. verschaltet, das entsprechend angesteuert wird.

Das erste Entwässerungsventil A91 ist bevorzugt als Magnetventil ausgebildet und dient zur Entwässerung des Heißgetränkeautomaten HGA bei Frostgefahr. Das erste Entwässerungsventil A91 wird nachfolgend in der Funktion beschrieben.

Das Frischwasser FW gelangt über den Durchflussmesser A4 zu einer Parallelschaltung, die aus einer Druckerhöhungspumpe A5 und aus einem dazu parallel geschalteten Überdruckventil A6 besteht.

Das Frischwasser FW, das vom Durchflussmesser A4 kommt, gelangt an jeweilige Eingänge der Druckerhöhungspumpe A5 bzw. des Überdruckventils A6.

Die Druckerhöhungspumpe A5 hat die Funktion, das ihr zugeführte Frischwasser FW für die gewünschte Kaffeezubereitung auf einen vorbestimmten Betriebsdruck zu bringen.

Das Überdruckventil A6 gleicht bei Bedarf einen durch die Druckerhöhungspumpe A5 verursachten Überdruck aus. Mit anderen Worten wird hier der gewünschte und vorbestimmte Betriebsdruck zur Kaffeezubereitung fein-justiert.

Die Druckerhöhungspumpe A5 bzw. das Überdruckventil A6 sind ausgangsseitig miteinander verbunden, so dass das aufgeteilte Frischwasser FW nach Durchquerung der Parallelschaltung, bestehend aus Druckerhöhungspumpe A5 bzw. Überdruckventil A6, wieder zusammengefasst wird und sowohl an einen Heißwasserboiler A8 als auch an ein zweites Entwässerungsventil A92 gelangt.

Der Heißwasserboiler A8 ist mit einem elektropneumatischen Ventil A7 gekoppelt.

Der Heißwasserboiler A8 erhitzt das ihm zugeführte Frischwasser FW für die geplante Kaffeezubereitung.

Das elektropneumatischen Ventil A7 erlaubt dann, dass das erhitzte Frischwasser FW vom Heißwasserboiler A8 zu einem Kaffeefilter, der mit Kaffeepulver gefüllt ist (hier nicht dargestellt), zur Kaffeezubereitung gelangt.

Das zweite Entwässerungsventil A92 ist bevorzugt als Magnetventil ausgebildet und dient zur Entwässerung des Heißgetränkeautomaten HGA bei Frostgefahr. Das zweite Entwässerungsventil A92 wird nachfolgend in der Funktion beschrieben. Sowohl das erste Entwässerungsventil A91 als auch das zweite Entwässerungsventil A92 sind ausgangsseitig mit dem Grauwasserbehälter GWB des Heißgetränkeautomaten HGA verbunden.

Wie vorstehend beschrieben, ist der Grauwasserbehälter GWB manuell entnehmbar, um das darin enthaltene Grauwasser GW manuell durch Personal entsorgen zu können.

Alternativ oder zusätzlich dazu wird das Grauwasser GW vor dem Grauwasserbehälter GWB oder aus dem Grauwasserbehälter GWB heraus signalgesteuert und über eine Ableitung dem Gleisbett GB zugeführt.

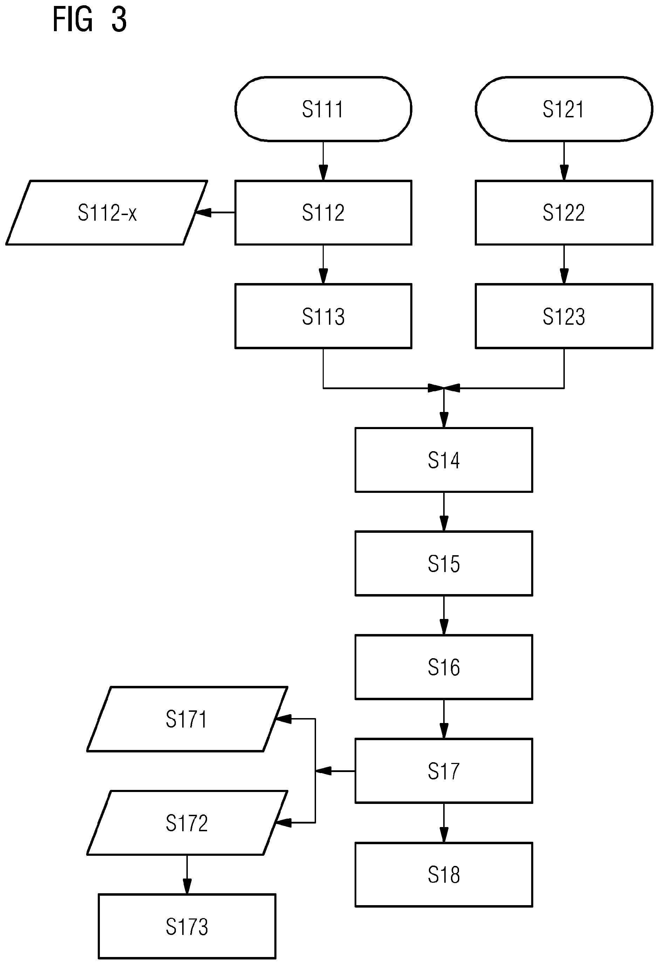

FIG 3 zeigt eine erfindungsgemäße Frostentleerung, die zentral initialisiert wird - beispielsweise von einem Führerstand des Schienenfahrzeugs aus.

Eine sogenannte "große Frostentleerung" ist im linken Zweig der FIG 3 gezeigt.

In einem ersten Schritt S111 die "große Frostentleerung" vom Führerstand aus gestartet.

Nachfolgend wird in einem zweiten Schritt S112 der Frischwasserbehälter FWB entleert.

Zu diesem Zweck verfügt der Frischwasserbehälter FWB über einen Ablauf, der signalgesteuert über ein Magnetventil geöffnet oder geschlossen wird. Die Entleerung erfolgt über diesen Ablauf, bevorzugt direkt in das Gleisbett. Dies ist in Schritt S112-x dargestellt.

In einem dritten Schritt S113 wird die Entleerung des Frischwasserbehälters FWB beendet.

Eine sogenannte "kleine Frostentleerung" ist im rechten Zweig der FIG 3 gezeigt.

Hier erfolgt bei Frostgefahr lediglich eine Leerung des Frischwasser-führenden Leitungssystems LS.

In einem ersten Schritt S121 wird die "kleine Frostentleerung" vom Führerstand aus gestartet.

Nachfolgend wird in einem zweiten Schritt S122 das Magnetventil A2 als Absperrventil des Frischwasserbehälters FWB benutzt. Es wird geschlossen, so dass kein Frischwasser FW aus dem Frischwasserbehälter FWB mehr entnommen werden kann.

In einem dritten Schritt S123 wird ein Leitungsbelüftungsventil, das in der Frischwasser-Zulaufleitung A1 angeordnet ist, angesteuert.

Das nachfolgende Leitungssystem LS wird dadurch belüftet, so dass darin enthaltenes Wasser, wie nachfolgend beschrieben, zum Grauwasserbehälter GWB bzw. zum Gleisbett GB gelangt.

Sowohl bei der "großen Frostentleerung" als auch bei der "kleinen Frostentleerung" werden in einem vierten Schritt S14 die beiden Entwässerungsventile A91 und A92 angesteuert und in einem fünften Schritt S15 geöffnet.

In einem sechsten Schritt S16 wird die Druckerhöhungspumpe A5 angesteuert, so dass der Heißwasserboiler A8 entleert wird.

Die Entleerung des Heißwasserboilers A8 ist Teil eines Selbstreinigungszyklus, der in einem siebten Schritt S17 automatisch gestartet wird.

Das im Heißwasserboiler A8 enthaltene Frischwasser FW wird
- direkt dem Gleisbett GB zugeführt, vgl. hierzu Schritt S171, oder
- es gelangt in den Grauwasserbehälter GWB, vgl. hierzu Schritt S172, um nachfolgend manuell entsorgt zu werden, vgl. hierzu Schritt S173, oder
- es gelangt über den Grauwasserbehälter GWB zum Gleisbett.

In einem achten Schritt S18 wird eine Meldung gebildet, dass die Frostentleerung abgeschlossen ist.

Nachfolgend werden die beiden Entwässerungsventile A91 und A92 wieder geschlossen.

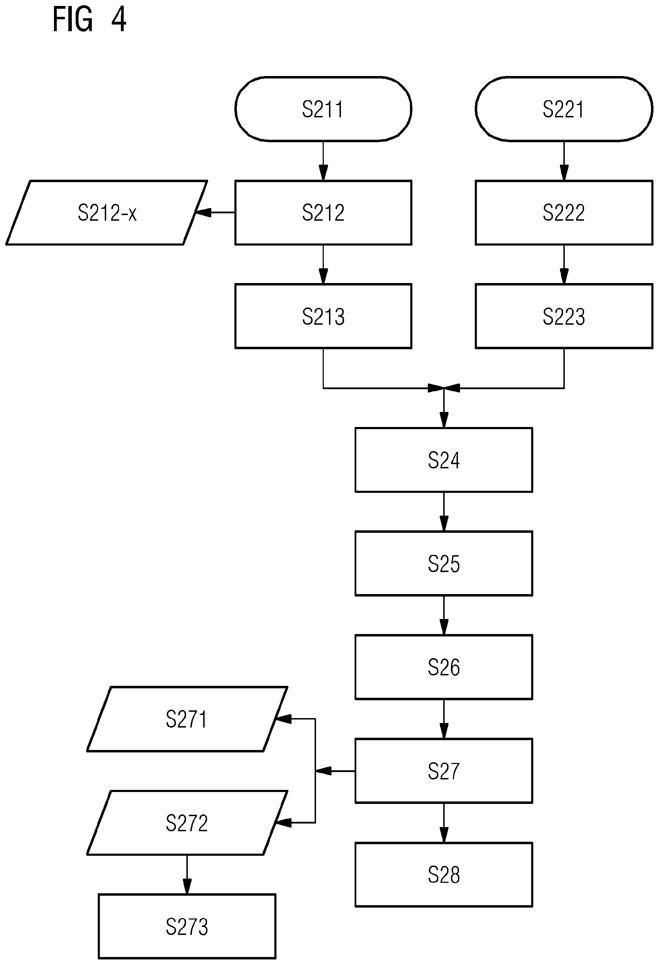

FIG 4 zeigt eine erfindungsgemäße Frostentleerung, die lokal initialisiert wird - beispielsweise vom Heißgetränkeautomaten HGA aus.

Die hier gezeigte Frostentleerung wird vollständig automatisiert durchgeführt.

Eine sogenannte "große Frostentleerung" ist im linken Zweig der Fig 4 gezeigt.

In einem ersten Schritt S211 wird die "große Frostentleerung" am Heißgetränkeautomaten HGA gestartet.

Nachfolgend wird in einem zweiten Schritt S212 der Frischwasserbehälter FWB entleert.

Zu diesem Zweck verfügt der Frischwasserbehälter FWB über einen Ablauf, der signalgesteuert über ein Magnetventil geöffnet oder geschlossen wird. Die Entleerung erfolgt über diesen Ablauf, bevorzugt direkt in das Gleisbett. Dies ist in Schritt S212-x dargestellt.

In einem dritten Schritt S213 wird die Entleerung des Frischwasserbehälters FWB beendet.

Eine sogenannte "kleine Frostentleerung" ist im rechten Zweig der FIG 4 gezeigt.

Hier erfolgt bei Frostgefahr lediglich eine Leerung des Frischwasser-führenden Leitungssystems LS.

In einem ersten Schritt S221 wird die "kleine Frostentleerung" am Heißgetränkeautomaten HGA gestartet.

In einem zweiten Schritt S222 wird das Magnetventil A2 als Absperrventil am Frischwasserbehälter FWB geschlossen, so dass kein Frischwasser FW aus dem Frischwasserbehälter FWB mehr entnommen werden kann.

In einem dritten Schritt S223 wird ein Leitungsbelüftungsventil, das in der Frischwasser-Zulaufleitung A1 angeordnet ist, angesteuert.

Das nachfolgende Leitungssystem LS wird dadurch belüftet, so dass darin enthaltenes Wasser, wie nachfolgend beschrieben, zum Grauwasserbehälter GWB bzw. zum Gleisbett gelangt.

Sowohl bei der "großen Frostentleerung" als auch bei der "kleinen Frostentleerung" werden in einem vierten Schritt S24 die beiden Entwässerungsventile A91 und A92 angesteuert und in einem fünften Schritt S25 geöffnet.

In einem sechsten Schritt S26 wird die Druckerhöhungspumpe A5 angesteuert, so dass der Heißwasserboiler A8 entleert wird.

Die Entleerung des Heißwasserboilers A8 ist Teil eines Selbstreinigungszyklus, der in einem siebten Schritt S27 automatisch gestartet wird.

Das im Heißwasserboiler A8 enthaltene Frischwasser FW wird
- direkt dem Gleisbett zugeführt, vgl. hierzu Schritt S271, oder
- es gelangt in den Grauwasserbehälter GWB, vgl. hierzu Schritt S272, um nachfolgend manuell entsorgt zu werden, vgl. hierzu Schritt S273, oder
- es gelangt über den Grauwasserbehälter GWB zum Gleisbett GB.

In einem achten Schritt S28 wird eine Meldung gebildet, dass die Frostentleerung abgeschlossen ist.

Nachfolgend werden die beiden Entwässerungsventile A91 und A92 geschlossen.

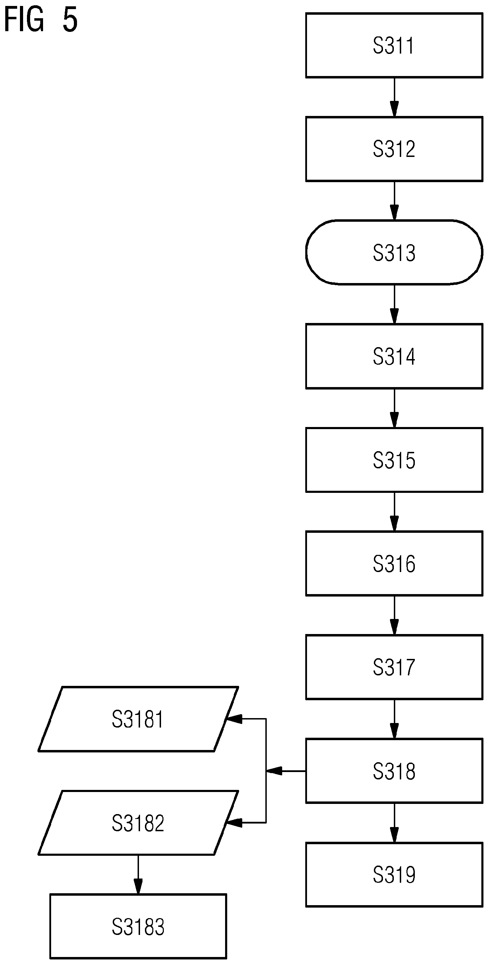

Fig 5 zeigt eine erfindungsgemäße Frostentleerung, die lokal initialisiert und unter Verwendung eines Gallonensystems erfolgt.

In einem ersten Schritt S311 wird der Bestandteil des Leitungssystems LS abgeklemmt, der zwischen der Druckerhöhungspumpe A5 und dem Heißwasserboiler A8 angeordnet ist.

Dabei auslaufendes Wasser wird in einer Auffangwanne des Heißgetränkeautomaten HGA gesammelt.

In einem zweiten Schritt S312 wird eine Sauglanze aus dem Frischwasserbehälter FWB bzw. aus den Gallonen GA1, GA2 entnommen bzw. demontiert. Nachfolgend werden die beiden Gallonen GA1, GA2 entnommen.

In einem dritten Schritt S313 wird eine "kleine Frostentleerung gestartet, um das Leitungssystem LS im Heißgetränkeautomaten und hier insbesondere die Druckerhöhungspumpe A5 zu entwässern.

In einem vierten Schritt S314 wird das Leitungsbelüftungsventil, das in der Frischwasser-Zulaufleitung A1 angeordnet ist, angesteuert.

Das nachfolgende Leitungssystem LS wird dadurch belüftet, so dass darin enthaltenes Wasser, wie nachfolgend beschrieben, zum Grauwasserbehälter GWB bzw. zum Gleisbett gelangt.

In einem fünften Schritt S315 werden die beiden Entwässerungsventile A91 und A92 angesteuert und in einem sechsten Schritt S316 geöffnet.

In einem siebten Schritt S317 wird die Druckerhöhungspumpe A5 angesteuert, so dass der Heißwasserboiler A8 entleert wird.

Die Entleerung des Heißwasserboilers A8 ist Teil eines Selbstreinigungszyklus, der in einem achten Schritt S318 automatisch gestartet wird.

Das im Heißwasserboiler A8 enthaltene Frischwasser FW wird
- direkt dem Gleisbett zugeführt, vgl. hierzu Schritt S3181, oder
- es gelangt in den Grauwasserbehälter GWB, vgl. hierzu Schritt S3182, um nachfolgend manuell entsorgt zu werden, vgl. hierzu Schritt S3183, oder
- es gelangt über den Grauwasserbehälter GWB zum Gleisbett GB.

In einem neunten Schritt S319 wird eine Meldung gebildet, dass die Frostentleerung abgeschlossen ist.

Nachfolgend werden die beiden Entwässerungsventile A91 und A92 geschlossen.

## Patentansprüche

1. Frostsicherung eines Heißgetränkeautomaten (HGA) in einem Schienenfahrzeug,
- bei der der Heißgetränkeautomat (HGA) einen Frischwasserbehälter (FWB), eine Druckerhöhungspumpe (A5) sowie einen Heißwasserboiler (A8) aufweist,
- bei der der Frischwasserbehälter (FWB) mit Frischwasser (FW) gefüllt ist, das zur Heißgetränkezubereitung bereitgestellt und verwendet wird,
- bei der die Druckerhöhungspumpe (A5) zwischen dem Frischwasserbehälter (FWB) und dem Heißwasserboiler (A8) angeordnet ist, so dass Frischwasser (FW) vom Frischwasserbehälter (FWB) über die Druckerhöhungspumpe (A5) zum Heißwasserboiler (A8) gelangt,
- bei der die Druckerhöhungspumpe derart ausgebildet ist, dass ihr zugeführtes Frischwasser (FW) für eine gewünschte Heißgetränkezubereitung auf einen vorbestimmten Betriebsdruck gebracht wird,
- bei der der Heißwasserboiler (A8) derart ausgestaltet ist, dass er ihm zugeführtes Frischwasser (FW) für die geplante Heißgetränkezubereitung erhitzt,
- bei der zwischen dem Frischwasserbehälter (FWB) und der Druckerhöhungspumpe (A5) ein ansteuerbares erstes Entwässerungsventil (A91) angeordnet ist, das derart geschaltet ist, dass bei Frostgefahr das Leitungssystem (LS) zwischen dem Frischwasserbehälter (FWB) und der Druckerhöhungspumpe (A5) von Frischwasser (FW) entleert wird, und
- bei der zwischen der Druckerhöhungspumpe (A5) und dem Heißwasserboiler (A8) ein ansteuerbares zweites Entwässerungsventil (A92) angeordnet ist, das derart geschaltet ist, dass bei Frostgefahr das Leitungssystem (LS) zwischen der Druckerhöhungspumpe (A5) und dem Heißwasserboiler (A8) sowie der Inhalt des Heißwasserboilers (A8) von Frischwasser (FW) entleert wird.

2. Frostsicherung nach Anspruch 1, bei der das erste Entwässerungsventil (A92) und/oder das zweite Entwässerungsventil (A92) ausgangsseitig mit einem Grauwasserbehälter (GWB) oder mit einem Gleiskörper verbunden sind, um das aus den Leitungssystemen entleerte Frischwasser (FW) zu entsorgen.

3. Frostsicherung nach Anspruch 1, bei der der Frischwasserbehälter (FWB) mindestens eine Gallone (GA1, GA2) aufweist, die durch Personal entnehmbar ist.

4. Frostsicherung nach Anspruch 1, bei der der Frischwasserbehälter (FWB) mit einem steuerbaren Ventil verbunden ist, über das bei Frostgefahr das im Frischwasserbehälter (FWB) enthaltene Frischwasser dem Gleisbett (GB) zugeführt wird.

5. Frostsicherung nach Anspruch 2, bei der der Heißgetränkeautomat (HGA) den Grauwasserbehälter (GWB) aufweist, in dem bei der Heißgetränkezubereitung bzw. bei einem Reinigungsprozess entstandenes Grauwasser (GW) gesammelt wird.

6. Frostsicherung nach Anspruch 2, bei der der Grauwasserbehälter (GWB) mit einem steuerbaren Ventil verbunden ist, über das bei Frostgefahr das im Grauwasserbehälter (GWB) enthaltene Wasser dem Gleisbett (GB) zugeführt wird.

7. Frostsicherung nach Anspruch 2, bei der der Grauwasserbehälter (GWB) derart ausgebildet ist, dass er für eine Entleerung durch Personal manuell entnehmbar ist.

8. Frostsicherung nach Anspruch 1, bei der das erste Entwässerungsventil (A92) und/oder das zweite Entwässerungsventil (A92) als steuerbares Magnetventil ausgebildet ist.

9. Frostsicherung nach einem der vorhergehenden Ansprüche, bei der der Heißgetränkeautomat (HGA) ein Magnetventil (A2), einen Ausgleichsbehälter (A3) und einen Durchflussmesser (A4) aufweist, die derart angeordnet sind,
- dass Frischwasser (FW) vom Frischwasserbehälter (FWB) zum Magnetventil (A2) gelangt,
- dass Frischwasser (FW) vom Magnetventil (A2) zum Ausgleichsbehälter (A3) gelangt
- dass Frischwasser (FW) vom Ausgleichsbehälter (A3) sowohl zu einem Eingang des Durchflussmesser (A4) als auch zu einem Eingang des ersten Entwässerungsventils (A91) gelangt, wobei das ersten Entwässerungsventil (A91) ausgangseitig mit dem Grauwasserbehälter (GWB) oder mit dem Gleisbett verbunden ist,
- dass Frischwasser (FW) über den Durchflussmesser (A4) zum Eingang der Druckerhöhungspumpe (A5) gelangt,
- wobei das Magnetventil (A2) die Funktionalität aufweist, eine Menge an benötigtem Frischwasser (FW) aus dem Frischwasserbehälter (FWB) für eine gewünschte Heißgetränkezubereitung bereitzustellen,
- wobei der Ausgleichsbehälter (A3) temperaturbedingte Änderungen des Frischwassers (FW) kompensiert, und
- wobei der Durchflussmesser (A4) über das Magnetventil (A2) steuert, dass eine gewünschte Menge an Frischwasser (FW) zur Heißgetränkezubereitung gelangt.

10. Frostsicherung nach einem der vorhergehenden Ansprüche, bei der parallel zur Druckerhöhungspumpe (A5) ein Überdruckventil (A6) geschaltet ist, deren Eingänge derart verbunden sind, dass vom Durchflussmesser (A4) kommendes Frischwasser (FW) sowohl an den Eingang der Druckerhöhungspumpe (A5) als auch an den Eingang des Überdruckventils (A6) gelangt, wobei das Überdruckventil (A6) bei Bedarf einen durch die Druckerhöhungspumpe (A5) verursachten Überdruck ausgleicht.

11. Frostsicherung nach einem der vorhergehenden Ansprüche, bei der die Druckerhöhungspumpe (A5) bzw. das Überdruckventil (A6) ausgangsseitig miteinander derart verbunden sind, dass das aufgeteilte Frischwasser (FW) nach Durchquerung der Parallelschaltung wieder zusammengefasst wird und an Eingänge des Heißwasserboilers (A8) und des zweiten Entwässerungsventils (A92) gelangt, wobei das zweite Entwässerungsventil (A91) ausgangseitig mit dem Grauwasserbehälter (GWB) oder mit dem Gleisbett verbunden ist.

12. Frostsicherung nach einem der vorhergehenden Ansprüche, bei der der Heißwasserboiler (A8) mit einem elektropneumatischen Ventil (A7) gekoppelt ist, das derart ausgebildet ist, dass erhitzte Frischwasser (FW) vom Heißwasserboiler (A8) zur Heißgetränkezubereitung gelangt.

## Claims

1. Frost protection for an automatic hot drinks machine (HGA) in a rail vehicle,
- wherein the automatic hot drinks machine (HGA) has a fresh water container (FWB), a pressure-increasing pump (A5) and a hot water boiler (A8),
- wherein the fresh water container (FWB) is filled with fresh water (FW) which is provided and used for hot drinks preparation,
- wherein the pressure-increasing pump (A5) is arranged between the fresh water container (FWB) and the hot water boiler (A8) such that fresh water (FW) passes from the fresh water container (FWB) via the pressure-increasing pump (A5) to the hot water boiler (A8),
- wherein the pressure-increasing pump is designed in such a way that fresh water (FW) fed to it is brought to a predetermined operating pressure for a desired hot drinks preparation,
- wherein the hot water boiler (A8) is configured in such a way that it heats fresh water (FW) fed to it for the planned hot drinks preparation,
- wherein a controllable first drainage valve (A91) is arranged between the fresh water container (FWB) and the pressure-increasing pump (A5) and is connected in such a way that, when there is a risk of frost, the line system (LS) between the fresh water container (FWB) and the pressure-increasing pump (A5) is emptied of fresh water (FW), and
- wherein a controllable second drainage valve (A92) is arranged between the pressure-increasing pump (A5) and the hot water boiler (A8) and is connected in such a way that, when there is a risk of frost, the line system (LS) between the pressure-increasing pump (A5) and the hot water boiler (A8) and also the contents of the hot water boiler (A8) are emptied of fresh water (FW) .

2. Frost protection according to Claim 1, wherein the first drainage valve (A92) and/or the second drainage valve (A92) are or is connected on the outlet side to a greywater container (GWB) or to a track body in order to dispose of the fresh water (FW) emptied from the line systems.

3. Frost protection according to Claim 1, wherein the fresh water container (FWB) has at least one gallon vessel (GA1, GA2) which can be removed by personnel.

4. Frost protection according to Claim 1, wherein the fresh water container (FWB) is connected to a controllable valve via which, when there is a risk of frost, the fresh water contained in the fresh water container (FWB) is fed to the track bed (GB).

5. Frost protection according to Claim 2, wherein the automatic hot drinks machine (HGA) has the greywater container (GWB) in which there is collected greywater (GW) which has been produced during the hot drinks preparation or during a cleaning process.

6. Frost protection according to Claim 2, wherein the greywater container (GWB) is connected to a controllable valve via which, when there is a risk of frost, the water contained in the greywater container (GWB) is fed to the track bed (GB).

7. Frost protection according to Claim 2, wherein the greywater container (GWB) is designed in such a way that it can be manually removed for emptying by personnel.

8. Frost protection according to Claim 1, wherein the first drainage valve (A92) and/or the second drainage valve (A92) are or is designed as a controllable solenoid valve.

9. Frost protection according to one of the preceding claims, wherein the automatic hot drinks machine (HGA) has a solenoid valve (A2), a compensating container (A3) and a flowmeter (A4) which are arranged in such a way
- that fresh water (FW) passes from the fresh water container (FWB) to the solenoid valve (A2),
- that fresh water (FW) passes from the solenoid valve (A2) to the compensating container (A3),
- that fresh water (FW) passes from the compensating container (A3) both to an inlet of the flowmeter (A4) and to an inlet of the first drainage valve (A91), wherein the first drainage valve (A91) is connected on the outlet side to the greywater container (GWB) or to the track bed,
- that fresh water (FW) passes via the flowmeter (A4) to the inlet of the pressure-increasing pump (A5),
- wherein the solenoid valve (A2) has the functionality of providing a quantity of required fresh water (FW) from the fresh water container (FWB) for a desired hot drinks preparation,
- wherein the compensating container (A3) compensates for temperature-related changes in the fresh water (FW), and
- wherein the flowmeter (A4) via the solenoid valve (A2) performs control in such a way that a desired quantity of fresh water (FW) passes for hot drinks preparation.

10. Frost protection according to one of the preceding claims, in which an overpressure valve (A6) is connected parallel to the pressure-increasing pump (A5) and the inlets of which valve are connected in such a way that fresh water (FW) coming from the flowmeter (A4) passes both to the inlet of the pressure-increasing pump (A5) and to the inlet of the overpressure valve (A6), wherein, if required, the overpressure valve (A6) compensates for an overpressure caused by the pressure-increasing pump (A5).

11. Frost protection according to one of the preceding claims, wherein the pressure-increasing pump (A5) and the overpressure valve (A6) are connected to one another on the outlet side in such a way that, after crossing through the parallel circuit, the divided fresh water (FW) is combined again and passes to inlets of the hot water boiler (A8) and of the second drainage valve (A92), wherein the second drainage valve (A91) is connected on the outlet side to the greywater container (GWB) or to the track bed.

12. Frost protection according to one of the preceding claims, wherein the hot water boiler (A8) is coupled to an electropneumatic valve (A7) which is designed in such a way that heated fresh water (FW) passes from the hot water boiler (A8) for hot drinks preparation.

## Revendications

1. Dispositif antigel d'un distributeur automatique de boissons chaudes (HGA) installé dans un véhicule ferroviaire,
- dans lequel le distributeur de boissons chaudes (HGA) comprend un réservoir d'eau fraîche (FWB), une pompe de surpression (A5) ainsi qu'un chauffe-eau (A8),
- dans lequel le réservoir d'eau fraîche (FWB) est rempli d'eau fraîche (FW) qui est mise à disposition et utilisée pour la préparation de boissons chaudes,
- dans lequel la pompe de surpression (A5) est disposée entre le réservoir d'eau fraîche (FWB) et le chauffe-eau (A8), de sorte que de l'eau fraîche (FW) parvienne depuis le réservoir d'eau fraîche (FWB) vers le chauffe-eau (A8) via la pompe de surpression (A5),
- dans lequel la pompe de surpression est conçue de manière à ce que l'eau fraîche (FW) lui étant amenée soit portée à une pression de service prédéterminée pour une préparation de boissons chaudes voulue,
- dans lequel le chauffe-eau (A8) est conçu de manière à ce qu'il chauffe l'eau fraîche (FW) lui étant amenée pour la préparation de boissons chaudes visée,
- dans lequel entre le réservoir d'eau fraîche (FWB) et la pompe de surpression (A5), une première vanne de purge excitable (A91) est prévue, qui est commutée de telle sorte qu'en cas de risque de gel, le système de conduites (LS) entre le réservoir d'eau fraîche (FWB) et la pompe de surpression (A5) soit purgé d'eau fraîche (FW), et
- dans lequel entre la pompe de surpression (A5) et le chauffe-eau (A8), une seconde vanne de purge excitable (A92) est prévue, qui est commutée de manière qu'en cas de risque de gel, le système de conduites (LS) entre la pompe de surpression (A5) et le chauffe-eau (A8) et le contenu du chauffe-eau (A8) soient purgés d'eau fraîche (FW) .

2. Dispositif antigel selon la revendication 1, dans lequel la première vanne de purge (A91) et/ou la seconde vanne de purge (A92) est/sont reliée(s), du côté sortie, à un réservoir d'eau grise (GWB) ou à une voie ferrée, afin d'évacuer l'eau fraîche (FW) purgée des systèmes de conduites.

3. Dispositif antigel selon la revendication 1, dans lequel le réservoir d'eau fraîche (FWB) comporte au moins un gallon (GA1, GA2) pouvant être prélevé par le personnel.

4. Dispositif antigel selon la revendication 1, dans lequel le réservoir d'eau fraîche (FWB) est relié à une vanne commandée grâce à laquelle, en cas de risque de gel, l'eau fraîche contenue dans le réservoir d'eau fraîche (FWB) est évacuée dans le ballast (GB).

5. Dispositif antigel selon la revendication 2, dans lequel le distributeur de boissons chaudes (HGA) comporte le réservoir d'eau grise (GWB) dans lequel l'eau grise (GW) produite lors de la préparation de boissons chaudes ou lors d'un processus de nettoyage est récupérée.

6. Dispositif antigel selon la revendication 2, dans lequel le réservoir d'eau grise (GWB) est pourvu d'une vanne commandée grâce à laquelle, en cas de risque de gel, l'eau grise contenue dans le réservoir d'eau grise (FWB) est évacuée dans le ballast (GB).

7. Dispositif antigel selon la revendication 2, dans lequel pour sa vidange, le réservoir d'eau grise (GWB) est conçu de manière à pouvoir être retiré manuellement par le personnel.

8. Dispositif antigel selon la revendication 1, dans lequel la première vanne de purge (A91) et/ou la seconde vanne de purge (A92) est/sont conçue(s) sous forme d'électrovanne réglable.

9. Dispositif antigel selon l'une quelconque des revendications précédentes, dans lequel le distributeur de boissons chaudes (HGA) comporte une électrovanne (A2), un réservoir de compensation (A3) ainsi qu'un débitmètre (A4) disposés de manière
- à ce que de l'eau fraîche (FW) puisse parvenir depuis le réservoir d'eau fraîche (FWB) à l'électrovanne (A2),
- à ce que de l'eau fraîche (FW) puisse parvenir depuis l'électrovanne (A2) au réservoir de compensation (A3),
- à ce que de l'eau fraîche (FW) puisse parvenir depuis le réservoir de compensation (A3) et à une entrée du débitmètre (A4) et à une entrée de la première vanne de purge (A91), la première vanne de purge (A91) étant reliée du côté de sa sortie au réservoir d'eau grise (GWB) ou au ballast,
- à ce que de l'eau fraîche (FW) parvienne à l'entrée de la pompe de surpression (A5) via le débitmètre (A4),
- l'électrovanne (A2) ayant la fonctionnalité de pouvoir mettre à disposition, depuis le réservoir d'eau fraîche (FWB), une quantité d'eau fraîche (FW) requise pour une préparation de boissons chaudes,
- le réservoir de compensation (A3) compensant des altérations de l'eau fraîche (FW) dues à la température, et
- le débitmètre (A4) assurant, via l'électrovanne (A2), qu'une quantité voulue d'eau fraîche (FW) soit amenée au distributeur de boissons chaudes.

10. Dispositif antigel selon l'une quelconque des revendications précédentes, dans lequel, parallèlement à la pompe de surpression (A5), un limiteur de pression (A6) est commuté dont les entrées sont reliées entre elles de manière à ce que de l'eau fraîche (FW) provenant du débitmètre (A4) parvienne et à l'entrée de la pompe de surpression (A5) et à l'entrée de la vanne de surpression (A6), la vanne de surpression (A6) compensant, en cas de besoin, une surpression éventuellement provoquée par la pompe de surpression (A5).

11. Dispositif antigel selon l'une quelconque des revendications précédentes, dans lequel la pompe de surpression (A5) respectivement la vanne de surpression (A6) est/sont reliée(s) entre elles du côté de leur sortie de manière à ce que l'eau fraîche (FW) répartie soit recanalisée après avoir traversé le circuit parallèle et parvienne à des entrées du chauffe-eau (A8) et de la seconde vanne de purge (A92), la seconde vanne de purge (A92) étant reliée, du côté de sa sortie, au réservoir d'eau grise (GWB) ou au ballast.

12. Dispositif antigel selon l'une quelconque des revendications précédentes, dans lequel le chauffe-eau (A8) est couplé à une soupape électropneumatique (A7) conçue de manière à ce que l'eau fraîche réchauffée (FW) soit amenée depuis le chauffe-eau (A8) au distributeur de boissons chaudes.
